# EUROPÄISCHE PATENTSCHRIFT

(11) **EP 0 679 546 B1**
(45) Veröffentlichungstag und Bekanntmachung des Hinweises auf die Patenterteilung: **18.12.1996**
(21) Anmeldenummer: 94106021.2
(22) Anmeldetag: 20.04.1994
(51) Int. Cl.: B60J 10/02, B60J 1/10

(54) **Karosseriefenster für Kraftfahrzeuge**
Bodywindow for a motor vehicle
Fenêtre pour carrosserie de véhicule automobile

(43) Veröffentlichungstag der Anmeldung: 02.11.1995
(73) Patentinhaber: HENNIGES ELASTOMER- UND KUNSTSTOFFTECHNIK GMBH & CO KG, D-31547 Rehburg-Loccum (DE)
(72) Erfinder: Kreye, Bernhard, D-31515 Wunstorf (DE)
(74) Vertreter: Wehser, Wulf, Dipl.-Ing.

(56) Entgegenhaltungen:
- EP-A- 0 121 481
- EP-A- 0 421 833
- EP-A- 0 545 896
- DE-A- 3 611 487
- US-A- 3 968 612

## Beschreibung

Die Erfindung betrifft ein Karosseriefenster für Kraftfahrzeuge, dessen Scheibe mit einem außerhalb des Karosserieblechs liegenden umspritzten Rahmen aus PVC oder dergleichen versehen ist.

Umspritzte Rahmen dieser Art sind an sich bekannt. Neben dem Schutz der Scheibenkante haben diese Rahmen aber auch den Zweck, den Abstand zwischen der Scheibenfläche und dem Karosserieblech zu verringern, um gegebenenfalls eine Verklebung zwischen Rahmen und Karosserieblech herbeizuführen. Eine solche Verklebung zwischen PVC und/oder anderen Umspritzungsmaterialien mit dem Karosserieblech macht aber erhebliche Schwierigkeiten. Zum einen muß die PVC-Oberfläche aufgerauht und geprimert werden, und zum anderen muß die Konstruktion so aussehen, daß eine möglichst zug- und schubfreie Verbindung zwischen dem Rahmen und dem Karosserieblech herstellbar ist.

Aber auch unter Berücksichtigung dieser Umstände sind zuverlässige Verklebungen dieser Art nicht erreichbar; denn wie die Praxis gezeigt hat, löst sich die Verklebung im Laufe der Jahre, was in höchst nachteiliger Weise zu einem Herausfallen der Scheibe und/oder deren Zerstörung führt.

Der Erfindung liegt demgemäß die Aufgabe zugrunde, ein Karosseriefenster für Kraftfahrzeuge der eingangs genannten Art so auszubilden, daß mit Sicherheit und mit ausreichend hohen Andruckkräften eine Verklebung zwischen dem Rahmen der Scheibe und dem Karosserieblech, also zwischen dem nach innen weisenden Abschnitt des Rahmens und der Außenseite des Karosseriebleches herbeiführbar ist.

Diese Aufgabe wird erfindungsgemäß dadurch gelöst, daß in dem umspritzten Rahmen ein sowohl scheibenseitig als auch zum Karosserieblech hin offener umlaufender Kanal vorgesehen ist, der nach dem Umspritzen mit einer Polyurethanmasse verbunden wird, die an der Scheibe unter Zwischenschaltung eines Klebers haftet, wobei der verbleibende Abstand zwischen der Polyurethanmasse und dem Karosserieblech durch einen Einlegestreifen aus Polyurethan herbeigeführt wird, der bei der Montage unter Vorspannung gesetzt und zusammengequetscht wird.

Mit dieser Anordnung wird erreicht, daß durch die Polyurethanmasse im Inneren des Kanals der Abstand zum Karosserieblech verringert wird, wobei diese Abstandsverringerung von der Tiefe des Kanals abhängt. Auf seiner dem Karosserieblech abgewandten Seite wird zwischen der Vergußmasse des Kanals und der Scheibenfläche unter Zwischenschaltung eines an beiden Materialien haftenden Klebers eine innige Verbindung zwischen der Kanalvergußmasse und der Scheibenfläche hergestellt, so daß gleichsam die dem Karosserieblech zugewandte Klebfläche der Scheibe an das Karosserieblech um die Stärke der Vergußmasse herangerückt wird.

Der verbleibende Abstand zwischen Vergußmasse und Karosserieblech wird dann durch einen Einlagestreifen, Klebestreifen oder dergleichen überbrückt, welcher zwischen der dem Karosserieblech zugewandten Seite der Vergußmasse im Kanal und dem Karosserieblech eingelegt wird. Bei der Montage wird dann der Ausgangsquerschnitt des Einlegestreifens, der auch aus einer auftragbaren Masse bestehen kann, zwischen Karosserieblech und Vergußmasse im Kanal zusammengequetscht, so daß es zu einer sehr guten Haftung kommt. Selbstverständlich ist der Ausgangsquerschnitt des Einlegestreifens so gewählt, daß während des Zusammenquetschvorganges der Einlegestreifen aufgrund seines Volumens seitlich sich ausdehnen und damit den Raum zwischen Vergußmassenoberfläche und Karosserieblech weitgehend füllen kann.

Hierbei ist es besonders vorteilhaft, wenn als Ausgangsquerschnitt für den Einlegestreifen ein dreiecksförmiger Querschnitt gewählt wird, wobei eine Dreiecksspitze zum Karosserieblech hinweist. Auf diese Weise wird zunächst der geringere Querschnitt des Einlegestreifens verformt, so daß die Verformungskraft allmählich ansteigt.

Normalerweise ist der Abstand zwischen der Glasscheibe und dem Karosserieblech größer als 9 mm, so daß es schwierig ist, einen solchen Abstand zu überbrücken. Im Gegensatz dazu ist bei der erfindungsgemäßen Anordnung eine Überbrückung des Restabstandes ohne weiteres möglich, so daß die vorgefertigten Fenster mit einem Rahmen versehen werden können, der bereits relativ nahe an das Karosserieblech herangerückt ist, so daß der Automobilhersteller ohne zusätzliche Vorbehandlung die Verklebung zwischen der Polyurethanvergußmasse und dem Karosserieblech vornehmen kann.

Die erfindungsgemäße Anordnung ermöglicht es aber auch, aufgrund der PVC-Profilierung des Rahmens die Scheibe einseitig zu umspritzen und auf der innen liegenden Seite der Scheibe eine Rahmenvorrichtung aufzubringen, welche die entsprechende Verformung des Rahmenmaterials vornimmt. In diese Rahmenvorrichtung wird dann die Polyurethanvergußmasse eingefüllt und nach deren Aushärten kann der Rahmen entnommen werden.

Die erfindungsgemäße Anordnung macht es außerdem möglich, die PVC-Profilierung im Außenbereich, falls dies aufgrund bestimmter Festigkeitswerte erforderlich ist, mit einem relativ großen Querschnitt zu versehen, während andererseits, beispielsweise um einen möglichst günstigen CW-Wert zu erreichen, die Rahmenprofilierung vergleichsweise dünnwandig auf der Scheibenaußenseite ausgeführt werden kann.

Die Erfindung wird im folgenden anhand von Ausführungsbeispielen in der Zeichnung näher erläutert.
- Fig. 1: zeigt in schematischer Darstellung ein erfindungsgemäß ausgebildetes Kraftfahrzeugfenster in Ansicht.
- Fig. 2: ist der Schnitt II-II durch den Rahmen nach Fig. 1.
- Fig. 3: ist der Schnitt III-III nach Fig. 1.
- Fig. 4: ist der Schnitt IV-IV nach Fig. 1.
- Fig. 5: ist ein Schnitt gemäß den vorangegangenen Figuren und zeigt in schematischer Darstellung eine Vorrichtung zur Herstellung eines Rahmens.

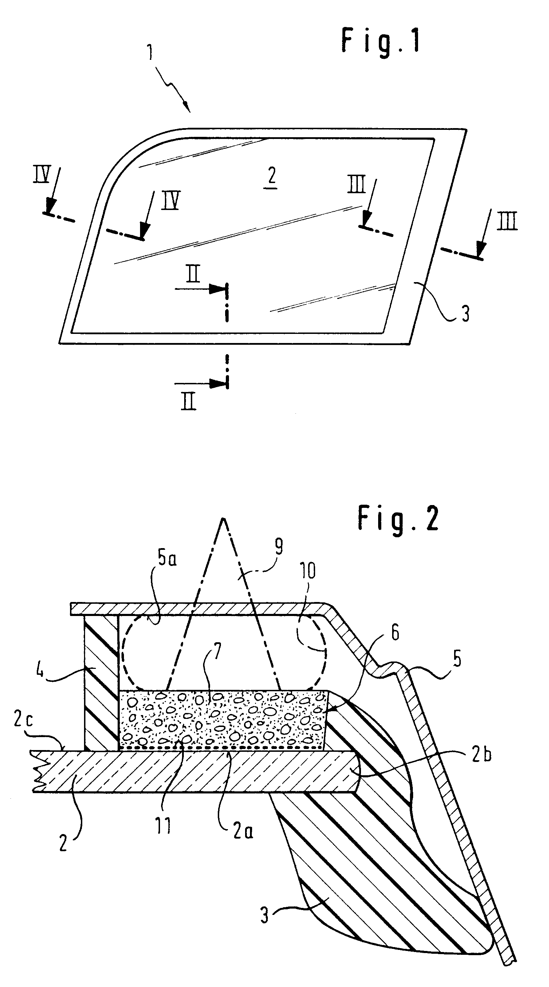

Gemäß den Figuren 1 und 2 ist eine Scheibe 2 eines Kraftfahrzeugfensters 1 mit einem Rahmen 3 umspritzt, der beim dargestellten Ausführungsbeispiel nach Fig. 2 einen relativ großen Querschnitt aufweisen kann. Der Rahmen 3 steht mit einem aus PVC bestehenden Steg 4 im Zusammenhang, welcher die Scheibe 2 gegen die Außenseite des Karosseriebleches 5 abstützt. In dem umspritzten Rahmen 3 ist ein scheibenseitig und zum Karosserieblech 5 hin offener umlaufender Kanal 6 vorgesehen. Der Kanal 6 ist mit einer Polyurethanmasse 7 vergossen, wobei scheibenseitig ein schematisch angedeuteter Kleber 11 die Verbindung zwischen der Polyurethanvergußmasse 7 und der zugewandten Scheibenfläche 2a herstellt.

Eine Verbindung der Vergußmasse 7 im Kanal 6 mit der Außenseite 5a des Karosseriebleches 5 wird durch einen schematisch angedeuteten Einlegestreifen 9 hergestellt, er beim dargestellten Ausführungsbeispiel einen dreiecksförmigen Querschnitt hat und bei der Montage, etwa wie bei 10 angedeutet, zusammengequetscht wird. Dadurch ergeben sich zwischen dem aus Polyurethan bestehenden Klebstreifen oder Einlegestreifen 9 relativ große Anlage- und Haftflächen.

Der Rahmen 3 haltert also zum einen durch sein Umgreifen um den Rand 2b der Scheibe 2 die Scheibe, während diese andererseits durch die Verbindung zwischen der den Kanal ausfüllenden Vergußmasse 7 und dem Kleber 11 sowie den Einlegestreifen 9 auch an ihrer relativ großen Seitenfläche 2c gehalten wird.

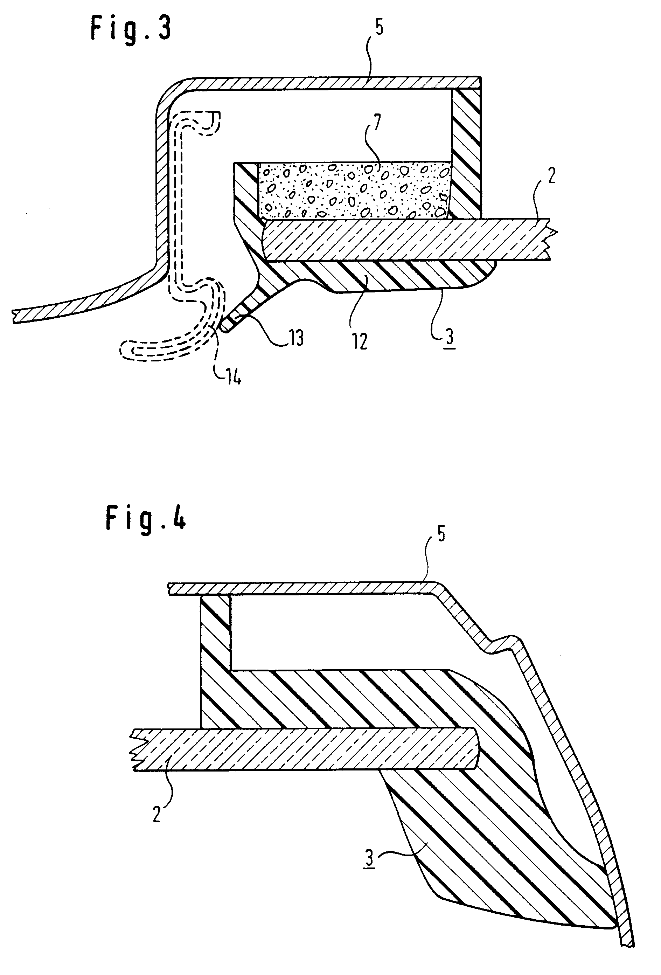

Während Fig. 2 eine Ausführungsform zeigt, bei welcher ein relativ großer innenliegender Querschnitt des Rahmens 3 vorgesehen ist, ist bei der Anordnung nach Fig. 3 der von außen die Scheibe 2 übergreifende Wandungsquerschnitt 12 des Rahmens 3 vergleichsweise dünn ausgebildet, um beispielsweise einen besseren CW-Wert zu erreichen.

Aus Fig. 3 geht außerdem noch eine Dichtlippe 13 hervor, die an einem nicht weiter ausgeführten Befestigungsteil 14 anliegt und die einstückig mit dem Rahmen 3 ausgebildet ist.

Bei der Ausführungsform nach Fig. 4 ist der Rahmen 3 mit einem besonders großen innerhalb und außerhalb der Scheibe 2 liegenden Querschnitt versehen, so daß sich ein sehr stabiler Rahmen ergibt. Dieser Rahmen nach Fig. 4 steht also im Gegensatz zu demjenigen nach Fig. 3.

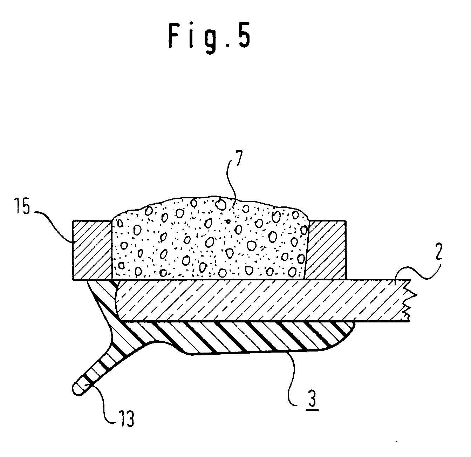

Fig. 5 zeigt in schematischer Darstellung eine Vorrichtung 15 zur Herstellung eines Rahmens 3, die nach Aushärten des Rahmenmaterials abgenommen werden kann, was die Anbringung und/oder Umspritzung des Rahmens wesentlich erleichtert. Die Vorrichtung 15 wird also nach dem Verguß mit der Polyurethanmasse wieder entfernt.

## Patentansprüche

1. Karosseriefenster für Kraftfahrzeuge, dessen Scheibe (2) mit einem außerhalb des Karosserieblechs (5) liegenden umspritzten Rahmen (3) aus PVC oder dergleichen versehen ist,
**dadurch gekennzeichnet,**
daß in dem umspritzten Rahmen (3) ein scheibenseitig und zum Karosserieblech (5) hin offener umlaufender Kanal (6) vorgesehen ist, der nach dem Umspritzen mit einer Polyurethanmasse (7) vergossen wird, die an der Scheibe (2) unter Zwischenschaltung eines Klebers (11) haftet, wobei eine Verbindung zwischen der Polyurethanvergußmasse (7) und dem Karosserieblech (5) durch einen Klebe- oder Einlagestreifen (9) aus Polyurethan herbeigeführt wird, der bei der Montage unter Vorspannung gesetzt und zusammengequetscht wird.

2. Karosseriefenster nach Anspruch 1, dadurch gekennzeichnet, daß der Klebe- oder Einlagestreifen (9) einen dreiecksförmigen Ausgangsquerschnitt aufweist.

3. Karosseriefenster nach Anspruch 2, dadurch gekennzeichnet, daß der dreiecksförmige Ausgangsquerschnitt des Klebe- oder Einlagestreifens 9 so angeordnet ist, daß eine Dreiecksspitze von der Auflagefläche auf der Polyurethanvergußmasse (7) wegweist.

4. Karosseriefenster nach einem der vorhergehenden Ansprüche, dadurch gekennzeichnet, daß der Rahmen (3) im wesentlichen auf der zum Fahrzeuginnenraum weisenden Scheibenfläche angeordnet ist.

5. Karosseriefenster nach Anspruch 4, dadurch gekennzeichnet, daß der den Scheibenrand auf der Karosserieaußenseite übergreifende Rahmenabschnitt (12) relativ dünnwandig ausgeführt ist.

6. Vorrichtung zur Herstellung eines Rahmens nach einem der vorhergehenden Ansprüche, dadurch gekennzeichnet, daß an die Scheibenfläche eine aus wenigstens zwei Abstandshaltern bestehende Vorrichtung (15) anschließt, die nach dem Aushärten der Polyurethanvergußmasse (7) entfernbar ist.

## Claims

1. A bodywork window for motor vehicles, the glass (2) of which is provided with a moulded-round frame (3) made of PVC or the like and situated outside the bodywork panel (5),
characterised in that
a surrounding channel (6) which is open on the glass side and towards the bodywork panel (5) is provided in the moulded-round frame (3), which channel is sealed, after the moulding-round operation, with a polyurethane material (7) which adheres to the glass (2) with the interposition of an adhesive (11), wherein a joint between the polyurethane sealing material (7) and the bodywork panel (5) is formed by an adhesive- or insert strip (9) made of polyurethane, which during assembly is placed under an initial stress and squeezed together.

2. A bodywork window according to claim 1, characterised in that the adhesive- or insert strip (9) has a triangular initial cross-section.

3. A bodywork window according to claim 2, characterised in that the triangular initial cross-section of the adhesive- or insert strip 9 is arranged so that one apex of the triangle points away from the supporting surface on the polyurethane sealing material (7).

4. A bodywork window according to any one of the preceding claims, characterised in that the frame (3) is substantially disposed on the face of the glass facing the interior space of the vehicle.

5. A bodywork window according to claim 4, characterised in that the frame section (12) which fits over the edge of the glass on the outside of the bodywork is of relatively thin-walled design.

6. A device for producing a frame according to any one of the preceding claims, characterised in that a device (15) consisting of at least two distance pieces adjoins the face of the glass and can be removed after the polyurethane sealing material (7) has cured.

## Revendications

1. Fenêtre de carrosserie de véhicule automobile dont la vitre (2) est pourvue d'un cadre (3) moulé par injection en PVC ou similaire, situé à l'extérieur de la tôle de carrosserie (5), caractérisée en ce que dans le cadre (3) moulé par injection est prévu un canal (6) périphérique côté vitre et ouvert vers la tôle de carrosserie (5), qui après moulage par injection est coulé avec une masse de polyuréthane (7), qui adhère à la vitre (2) par insertion d'une colle (11), une liaison entre la masse coulée de polyuréthane (7) et la tôle de carrosserie (5) est assurée par une bande adhésive ou bande de garniture (9) en polyuréthane, qui lors du montage est placée sous précontrainte et écrasée.

2. Fenêtre de carrosserie selon la revendication 1, caractérisée en ce que la bande adhésive ou bande de garniture (9), présente une section transversale initiale en forme de triangle.

3. Fenêtre de carrosserie selon la revendication 2, caractérisée en ce que la section transversale initiale en forme de triangle de la bande adhésive ou bande de garniture (9) est placée de manière qu'une pointe du triangle soit dirigée de la surface de support vers la masse coulée de polyuréthane (7).

4. Fenêtre de carrosserie selon l'une des revendications précédentes, caractérisée en ce que le cadre (3) est essentiellement placé sur la surface de vitre dirigée vers l'habitacle du véhicule.

5. Fenêtre de carrosserie selon la revendication 4, caractérisée en ce que la partie de cadre (12) passant sur le bord de la vitre, sur le côté extérieur de la carrosserie, est de paroi relativement mince.

6. Dispositif pour la fabrication d'un cadre selon l'une des revendications précédentes, caractérisé en ce qu'à la surface de vitre fait suite un dispositif (15) constitué de deux écarteurs, qui peuvent être enlevés après durcissement de la masse coulée de polyuréthane (7).
